# EUROPEAN PATENT APPLICATION

(11) **EP 4 764 308 A1**
(43) Date of publication of application: **24.06.2026**
(21) Application number: 24909842.7
(22) Date of filing: 15.08.2024
(51) Int. Cl.: F23D 14/82, F23D 14/72, F23D 14/58, H01M 8/04, F23D 14/02

(54) **COMBUSTOR AND SOFC SYSTEM**

(30) Priority: 29.12.2023 CN 202311870697
(71) Applicant: SHENZHEN THREE-CIRCLE TECHNOLOGY CO., LTD., Guangdong 518000 (CN); Chaozhou Three-Circle (Group) Co., Ltd., Chaozhou, Guangdong 515646 (CN)
(72) Inventor: CHEN, Shuoshuo, Chaozhou, Guangdong 515646 (CN); ZHANG, Dongyu, Chaozhou, Guangdong 515646 (CN)
(74) Representative: Porta & Consulenti Associati S.p.A.
(86) International application number: PCT/CN2024/112366
(87) International publication number: WO 2025/138891

(57) **Abstract**

The present application relates to the technical field of fuel cells, and discloses a combustor and an SOFC system. The combustor comprises a first pipe fitting, the first pipe fitting being provided with a first chamber; a second pipe fitting, the end of the second pipe fitting entering the first chamber being provided with a release member used for gas distribution; and a rectification member, arranged in the first chamber and connected to the second pipe fitting so as to define a second chamber used for gas combustion, the release member being located in the second chamber, and the second chamber being communicated with the first chamber. According to the combustor provided by embodiments of the present application, the structure is optimized, the large-range combustion load adjustment of the combustor from temperature rise to power generation is improved when the combustor is applied to an SOFC system, and the combustion effect is also enhanced.

## Description

### TECHNICAL FIELD

The present disclosure relates to the technical field of fuel cells, and in particular, to a combustor and a solid oxide fuel cell (SOFC) system.

### BACKGROUND

For most of the time, a combustor is a component that processes the low-calorific value gases emitted from the fuel cell stack to achieve clean emissions. However, to reduce costs and save space, the combustor should also function to heat up the SOFC system during startup. This requires the combustor to burn stably over an ultra-wide range of gas flow rates and combustible gas concentrations. At present, combustors used in SOFC systems mainly adopt catalytic combustion and flame combustion. Catalytic combustion has the advantages of stable combustion, wide combustion range, small size, etc., but its use of expensive precious metals as catalysts and its susceptibility to contamination by toxic gases, leading to a shortened service life, are increasingly limiting its application. Although flame combustors have the advantages of stable structure, long service life, etc., the turndown ratio of conventional combustors cannot meet the requirements of large-scale regulation of the cell system from heating to electricity generation, and the flame length limits the reduction of combustor volume, which undoubtedly increases the design difficulty of flame combustors.

### SUMMARY

The present disclosure aims to solve, at least to some extent, one of the technical problems in the existing technology. Therefore, embodiments of the present disclosure provide a combustor with an optimized structure, which can improve the combustion load adjustment in a wide range from heating to electricity generation of the combustor and enhance the combustion effect.

Embodiments of the present disclosure further provide an SOFC system.

In accordance with a first aspect of the present disclosure, an embodiment provides a combustor, including a first tube, provided with a first chamber; a second tube, where an end of the second tube entering the first chamber is provided with a release member configured for gas distribution; and a flow rectifier, arranged in the first chamber and connected to the second tube to define a second chamber configured for gas combustion, where the release member is located in the second chamber, and the second chamber is in communication with the first chamber.

The combustor at least has the following beneficial effects. The release member and the flow rectifier are additionally provided to adjust the flow rate of gas in the SOFC system in a wide range. Conventional combustors do not have targeted optimization of the gas inlet, which easily leads to flashback at low flow rates. Simply reducing the flow area of the gas inlet will cause the flame in the combustor to lengthen significantly, and the pressure loss of the combustor will not meet the requirements of the cell system. During use of the combustor of the present disclosure, gas is evenly distributed into the second chamber through the release member, and since the first chamber is in communication with the second chamber, the gas burns in the second chamber after ignition. When the gas is released at a large flow rate, the flow rectifier can limit the occurrence of flashback during combustion. When the gas is released at a small flow rate, the flow rate of the gas flowing through the release member is increased, to further prevent flashback and maintain stable combustion at low flow rates in the combustor, thereby reducing the thermal shock of the flame to the cell.

According to the combustor of the embodiment of the first aspect of the present disclosure, the release member includes a cylindrical segment and a truncated cone segment, the cylindrical segment is provided with first release holes, the truncated cone segment is provided with second release holes, and the first release holes are arranged staggered from the respective second release holes.

According to the combustor of the embodiment of the first aspect of the present disclosure, a cone angle of the truncated cone segment is 100° to 160°.

According to the combustor of the embodiment of the first aspect of the present disclosure, a quantity of the first release holes is 4 to 12, a quantity of the second release holes is 6 to 12, a ratio of a diameter of each of the first release holes to a diameter of the cylindrical segment is 0.15 to 0.4, and a ratio of a diameter of each of the second release holes to the diameter of each of the first release holes is 0.5 to 0.9.

According to the combustor of the embodiment of the first aspect of the present disclosure, the flow rectifier includes a first rectification segment and a second rectification segment, the first rectification segment is connected to the second tube, the first rectification segment is arranged surrounding the cylindrical segment, the truncated cone segment is located in the second rectification segment, and an internal space of the second rectification segment gradually expands in an axial direction of the first tube.

According to the combustor of the embodiment of the first aspect of the present disclosure, an expansion angle of the second rectification segment is 20° to 40°.

According to the combustor of the embodiment of the first aspect of the present disclosure, the second rectification segment is provided with a plurality of layers of distribution holes in communication with the first chamber and the second chamber in the axial direction, the distribution holes include a plurality of primary holes, a plurality of secondary holes, and a plurality of tertiary holes, the primary holes are adjacent to the first rectification segment, the primary holes account for 10% to 20% of a total hole area of the distribution holes, the secondary holes account for 5% to 15% of the total hole area of the distribution holes, and the tertiary holes account for 65% to 85% of a total hole area of the distribution holes.

According to the combustor of the embodiment of the first aspect of the present disclosure, a ratio of a diameter of each of the primary holes to a diameter of the first rectification segment is 0.05 to 0.2, a ratio of a diameter of each of the secondary holes to the diameter of the first rectification segment is 0.1 to 0.25, and a ratio of a diameter of each of the tertiary holes to the diameter of the first rectification segment is 0.1 to 0.35.

According to the combustor of the embodiment of the first aspect of the present disclosure, a ratio of a diameter of the first rectification segment to the diameter of the cylindrical segment is 1.5 to 2.

In accordance with a second aspect of the present disclosure, an embodiment provides an SOFC system including the combustor.

The SOFC system at least has the following beneficial effects. In the SOFC system using the combustor, the improved structural design can increase the adjustment range of the combustor, cover the requirement of the cell system in the entire period from heating to electricity generation, suppress flashback, maintain stable combustion at low flow rates in the combustor, reduce the thermal shock of the flame to the cell, inhibit the backflow of high-temperature exhaust gas, and control the temperature range of materials of the release member and the gas inlet.

### BRIEF DESCRIPTION OF DRAWINGS

The present disclosure will be further described below with reference to the accompanying drawings and embodiments.
FIG. 1 is a schematic structural diagram of a combustor according to an embodiment of the present disclosure;
FIG. 2 is a schematic structural cross-sectional view one of a combustor according to an embodiment of the present disclosure;
FIG. 3 is a schematic structural cross-sectional view two of a combustor according to an embodiment of the present disclosure;
FIG. 4 is a schematic diagram showing connection between a second tube and a flow rectifier according to an embodiment of the present disclosure; and
FIG. 5 is a schematic structural diagram of a release member according to an embodiment of the present disclosure.

### DETAILED DESCRIPTION

This section will give a detailed description of specific embodiments of the present disclosure. Preferred embodiments of the present disclosure are shown in the accompanying drawings. The accompanying drawings serve to supplement the text part of the description with figures, such that those having ordinary skills in the art can intuitively and vividly understand each technical feature and the overall technical scheme of the present disclosure, but the accompanying drawings are not intended to be construed as limiting the scope of protection of the present disclosure.

In the description of the present disclosure, it should be understood that for the description of orientations, the orientation or positional relationships indicated by the terms such as "up," "down," "front," "rear," "left," "right" and the like are based on orientation or positional relationships shown in the accompanying drawings, and are used only for ease and brevity of illustration and description, rather than indicating or implying that the mentioned apparatus or element must have a particular orientation or must be constructed and operated in a particular orientation. Therefore, such terms should not be construed as limiting of the present disclosure.

It should be understood that in the description of the embodiments of the present disclosure, the term "several" means one or more, the term "plurality of' (or multiple) means two or more, the term such as "greater than", "less than", "exceed" or variants thereof prior to a number or series of numbers is understood to not include the number adjacent to the term. The term such as "above," "below," "within," etc., are understood to include the number adjacent to the term. If used herein, the terms such as "first," "second," and the like are merely used for distinguishing technical features, and are not intended to indicate or imply relative importance, or implicitly point out the number of the indicated technical features, or implicitly point out the precedence order of the indicated technical features.

In the description of the present disclosure, unless otherwise explicitly defined, the terms such as "configure", "install/mount" and "connect" should be understood in a broad sense, and those having ordinary skills in the art can reasonably determine the specific meanings of the above terms in the present disclosure based on the specific contents of the technical scheme.

Solid oxide fuel cells (SOFCs) need to operate at high temperatures. A combustor is used as a heat source to provide a high-temperature environment for the SOFC. Prior to the electricity generation stage, the combustor provides heat required to raise the temperature of the cell system by burning fuel. In the electricity generation stage, the combustor achieves clean emissions by burning the low-calorific value combustible gases (mainly small amounts of H₂ and CO) discharged from the fuel cell stack. The heat from the completely combusted gases is then recovered and reused, thereby further improving the energy utilization efficiency of the cell system. Due to their extremely high electricity generation efficiency and energy utilization efficiency, SOFCs are considered a third-generation electricity generation technology.

For most of the time, a combustor is a component that processes the low-calorific value gases emitted from the fuel cell stack to achieve clean emissions. However, to reduce costs and save space, the combustor should also function to heat up the SOFC system during startup. This requires the combustor to burn stably over an ultra-wide range of gas flow rates and combustible gas concentrations. At present, combustors used in SOFC systems mainly adopt catalytic combustion and flame combustion. Catalytic combustion has the advantages of stable combustion, wide combustion range, small size, etc., but its use of expensive precious metals as catalysts and its susceptibility to contamination by toxic gases, leading to a shortened service life, are increasingly limiting its application. Although flame combustors have the advantages of stable structure, long service life, etc., the turndown ratio of conventional combustors cannot meet the requirements of large-scale regulation of the cell system from heating to electricity generation, and the flame length limits the reduction of combustor volume, which undoubtedly increases the design difficulty of flame combustors.

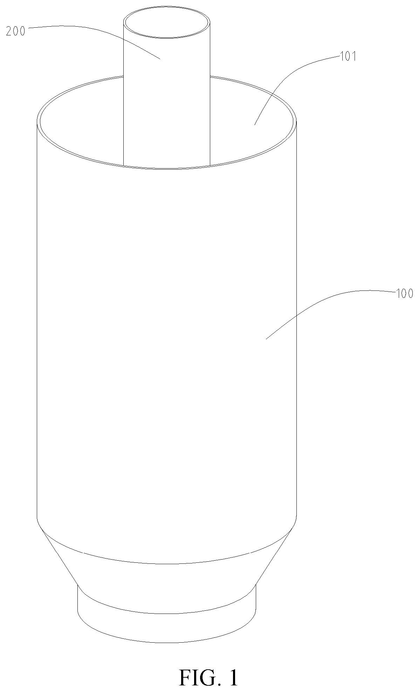

Therefore, to solve the above problems, referring to FIG. 1 to FIG. 3, the present disclosure provides a combustor, which includes a first tube 100, a second tube 200, and a flow rectifier 300.

The first tube 100 serves as an air shield, and is provided with a first chamber 101 therein. In a preferred embodiment, the first tube 100 includes a main body which is cylindrical, a diameter of one end of the first tube 100 gradually decreases to a preset size, and another end of the first tube 100 serves as an inlet of the first chamber 101 for air to enter. It should be noted that the first chamber 101 is provided with at least one air inlet.

The second tube 200 is configured for gas delivery. An end of the second tube 200 entering the first chamber 101 is provided with a release member 400 configured for gas distribution. The second tube 200 is provided with at least one gas inlet. Gas can be uniformly distributed by the release member 400, and the flow rate of the gas can be adjusted according to the volume of the gas flow. The flow rectifier 300 is arranged in the first chamber 101. Further, the flow rectifier 300 is connected to the second tube 200 to define a second chamber 301 configured for gas combustion. The second chamber 301 serves as a combustion chamber. The release member 400 is located in the second chamber 301. The second chamber 301 is in communication with the first chamber 101. A gap exists between the flow rectifier 300 and the first tube 100, providing a space to accommodate deformation of the flow rectifier 300, thereby reducing the concentration of thermal stress. An axis of the second tube 200 coincides with an axis of the first tube 100.

The release member 400 and the flow rectifier are additionally provided to adjust the flow rate of gas in the SOFC system in a wide range. Conventional combustors do not have targeted optimization of the gas inlet, which easily leads to flashback at low flow rates. Simply reducing the flow area of the gas inlet will cause the flame in the combustor to lengthen significantly, and the pressure loss of the combustor will not meet the requirements of the cell system. During use of the combustor of the present disclosure, gas is evenly distributed into the second chamber 301 through the release member 400, and since the first chamber 101 is in communication with the second chamber 301, the gas burns in the second chamber 301 after ignition. When the gas is released at a large flow rate, the flow rectifier 300 can limit the occurrence of flashback during combustion. When the gas is released at a small flow rate, the flow rate of the gas flowing through the release member 400 is increased, to further prevent flashback and maintain stable combustion at low flow rates in the combustor, thereby reducing the thermal shock of the flame to the cell.

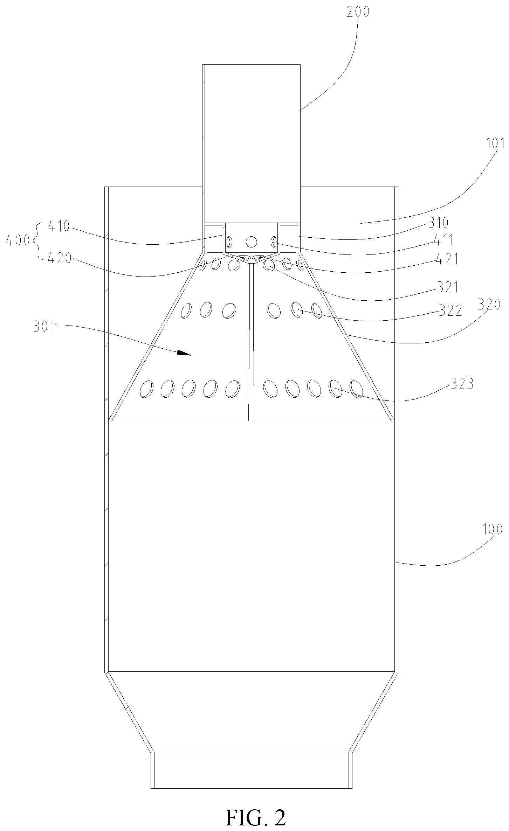

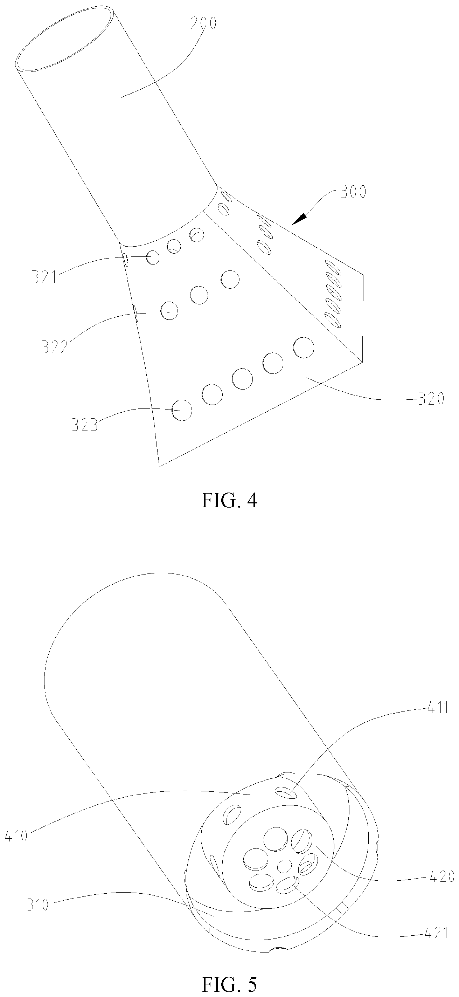

Further, as shown in FIG. 2 and FIG. 5, the release member 400 includes a cylindrical segment 410 and a truncated cone segment 420, the cylindrical segment 410 is columnar, a plurality of first release holes 411 are provided on a circumferential surface of the cylindrical segment 410 , the truncated cone segment 420 has a conical surface, second release holes 421 are provided on a part of the conical surface of the truncated cone segment 420, and the first release holes 411 are arranged staggered from the second release hole 421. As such, the gas can be uniformly released to different positions in the second chamber 301 through the cylindrical segment 410 and the truncated cone segment 420. When the gas flow rate is large, the gas flow rate can be controlled at a certain value by the release holes. When the flow rate is small, the gas flow rate can be further increased by increasing the number of release holes to prevent flashback, thereby maintaining stable combustion at very low flow rates in the combustor. In addition, the formation of holes in the conical surface of the truncated cone segment 420 suppresses the backflow of high-temperature exhaust gas, and isolates the high-temperature exhaust gas from metal materials, thereby effectively controlling the temperature of the metal materials.

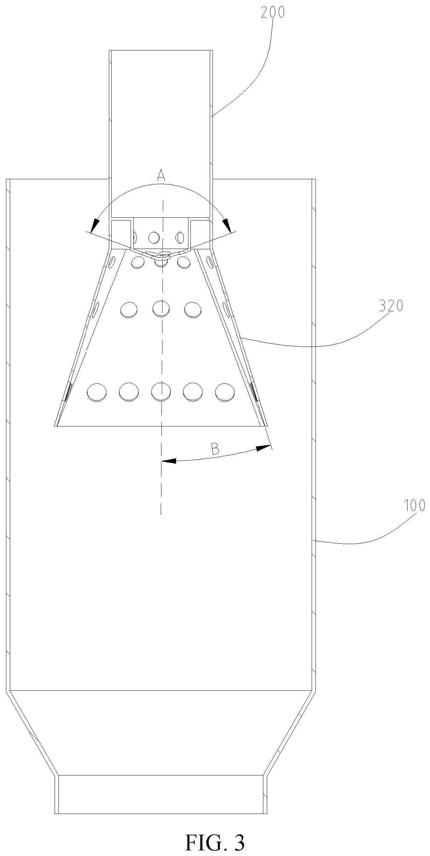

In an embodiment of the present disclosure, as shown in FIG. 3, a cone angle A of the truncated cone segment 420 is preferably 100° to 160°. The cone angle A is an angle formed by the intersection of extension lines of two opposite generatrices of the truncated cone segment 420. A cone angle A that is too low will result in an inability to suppress the backflow of the high-temperature exhaust gas, failing to isolate the high-temperature exhaust gas from the metal materials. A cone angle A that is too high will reduce the mixing of gas and air, leading to an increased flame length in the combustor.

It should be noted that the truncated cone segment 420 of the present disclosure is in the shape of a truncated cone, and the flat surface at the tip (i.e., the plane at the smaller diameter of the truncated cone segment 420) can prevent ablation and prevent local stress concentration. Certainly, in some other embodiments, the flat surface at the tip may be provided with a protrusion, and the protrusion is located within a range defined by the intersection of the extension lines of the two opposite generatrices of the conical surface of the truncated cone segment 420, i.e., the protrusion does not extend beyond the extension lines of the generatrices. The protrusion may be hemispherical or triangular, and a surface of the protrusion needs to be flat without pits or depressions.

In some embodiments, the cylindrical segment 410 is provided with 4 to 12 first release holes 411, the truncated cone segment 420 is provided with 6 to 12 second release holes 421, a ratio of a diameter of the first release hole 411 to a diameter of the cylindrical segment 410 is 0.15 to 0.4, and a ratio of a diameter of the second release hole 421 to the diameter of the first release hole 411 is 0.5 to 0.9. For the first release holes 411 and the second release holes 421, a too small number of release holes will lead to uneven distribution of gas in the circumferential direction, a too large number of release holes will lead to an excessively large hole area, a reduced flow rate, an increased risk of flashback, a narrower combustion range, etc. Further, a too low ratio of the diameter of the first release hole 411 to the diameter of the cylindrical segment 410 will increase the gas pressure loss, failing to meet the pressure loss requirements of the cell system, and a too high ratio of the diameter of the first release hole 411 to the diameter of the cylindrical segment 410 will lead to an excessively large hole area, a reduced flow rate, an increased risk of flashback, and a narrower combustion range. Further, a too low ratio of the diameter of the second release hole 421 to the diameter of the first release hole 411 will result in an inability to suppress the backflow of the high-temperature exhaust gas, failing to isolate the high-temperature exhaust gas from the metal materials, and a too high ratio of the diameter of the second release hole 421 to the diameter of the first release hole 411 will reduce the mixing of gas and air, leading to an increased flame length in the combustor.

In some embodiments, as shown in FIG. 2 to FIG. 4, the flow rectifier 300 includes a first rectification segment 310 and a second rectification segment 320, the first rectification segment 310 is connected to the second tube 200, the first rectification segment 310 is arranged surrounding the cylindrical segment 410. The first rectification segment 310 and the cylindrical segment 410 are used to adjust the flow in the combustor. When the gas flow rate is large, the first rectification segment 310 restricts flashback in the combustor. When the gas flow rate is small, the first rectification segment 310 alone cannot limit the flow rate, and the flow rate is further increased by increasing the number of holes on the release member 400 to prevent flashback, thereby maintaining stable combustion at very low flow rates in the combustor. Further, the truncated cone segment 420 is located in the second rectification segment 320, and internal space of the second rectification segment 320 gradually expands in an axial direction of the first tube 100. When the second rectification segment 320 is designed with such a gradually expanding structure, the cooperation of the release member 400, the first rectification segment 310, and the second rectification segment 320 enhances the mixing of gas and air, and a high-temperature exhaust gas return vortex is formed to enhance heat transfer, thereby enhancing combustion and shortening the length of the combustion flame.

Further, as shown in FIG. 3, an expansion angle B of the second rectification segment 320 is preferably 20° to 40°. In some embodiments, the second rectification segment 320 may have only one side surface or have a plurality of side surfaces. Regardless of whether the second rectification segment 320 has only one side surface or has a plurality of side surfaces, in the embodiments of the present disclosure, the expansion angle B of the second rectification segment 320 is an angle between a side surface and a central axis of the second rectification segment 320. In a preferred embodiment of the present disclosure, as shown in FIG. 4, the second rectification segment 320 has four side surfaces. Regarding the selection of the value of the expansion angle B, a too small expansion angle B will lead to an excessively strong air jet, unstable flame, smaller combustion space, and increased flame length. A too large expansion angle B will lead to weaker mixing of air and gas, insufficient combustion, and increased flame length.

Further, the second rectification segment 320 is provided with a plurality of layers of distribution holes in communication with the first chamber 101 and the second chamber 301 in the axial direction. The distribution holes are configured to control the amount of air entering the second chamber 301. If the amount of air entering the second chamber 301 through the distribution holes is too small, the combustion will be insufficient. If the amount of air entering the second chamber 301 through the distribution holes is too large, the air will blow out the combustion flame. The multi-layer arrangement for the distribution holes is conducive to the rational distribution of air to allow the gas in the second chamber 301 to fully burn, thereby improving the uniformity of the outlet temperature of the combustor and providing a more consistent heat source for downstream processes.

Further, as shown in FIG. 2 and FIG. 4, the distribution holes include a plurality of primary holes 321, a plurality of secondary holes 322, and a plurality of tertiary holes 323, the primary holes 321 are adjacent to the first rectification segment 310, the primary holes 321 account for 10% to 20% of a total hole area of the distribution holes, the secondary holes 322 account for 5% to 15% of the total hole area of the distribution holes, and the tertiary holes 323 account for 65% to 85% of a total hole area of the distribution holes. The primary holes 321, the secondary holes 322, and the tertiary holes 323 among the plurality of layers of distribution holes may be combustion holes (corresponding to the primary holes 321), transition holes (corresponding to the secondary holes 322), and mixing holes (corresponding to the tertiary holes 323) arranged in sequence. Air entering through the combustion holes is used for gas combustion, i.e., the combustion holes provide the amount of air required for combustion. If the amount of air provided through the combustion holes is too small, the combustion will be insufficient. If the amount of air provided through the combustion holes is too large, the air will blow out the combustion flame. The transition holes ensure that there is sufficient air before the gas is burned out. Air entering through the transition holes provide a certain amount of air supplement for the combustion to ensure complete combustion of the gas. If the amount of air provided through the transition holes is too small, a required effect cannot be achieved. If the amount of air provided through the transition holes is too large, the subsequent mixing process will be affected. The mixing holes allow the remaining amount of air to enter the second chamber 301. The mixing holes can enhance the mixing of the combustion exhaust gas and fresh air to improve the uniformity of the outlet temperature.

A ratio of a diameter of the primary hole 321 to a diameter of the first rectification segment 310 is 0.05 to 0.2, a ratio of a diameter of the secondary hole 322 to the diameter of the first rectification segment 310 is 0.1 to 0.25, and a ratio of a diameter of the tertiary hole 323 to the diameter of the first rectification segment 310 is 0.1 to 0.35. Regarding the setting of the diameters of the distribution holes, a too small diameter will lead to insufficient mixing of air and gas. A too large diameter will lead to an excessively strong air jet and unstable flame. The ratios of the diameters of the air distribution holes at different stages to the diameter of the first rectification segment 310 have the same impact on the performance. The diameter of the first rectification segment 310 represents the size of the combustion zone, i.e., the flame radius. The diameters of the air distribution holes represent the intensity of a lateral air jet, i.e., how deep the air can penetrate into the combustion zone. Therefore, the ratio of the diameter of the first rectification segment 310 to the diameter of the air distribution hole are two important parameters that affect the performance of the combustor.

Further, a ratio of a diameter of the first rectification segment 310 to the diameter of the cylindrical segment 410 is preferably 1.5 to 2. A too low ratio of the diameter of the first rectification segment 310 to the diameter of the cylindrical segment 410 will lead to an increased flame length and increased gas pressure loss, failing to meet the pressure loss requirements of the cell system. A too high ratio of the diameter of the first rectification segment 310 to the diameter of the cylindrical segment 410 will exceed the diffusion range of the gas nozzle, causing the combustion organization to fail.

An embodiment of the present disclosure further provides an SOFC system including the combustor. In the SOFC system using the combustor, the improved structural design can increase the adjustment range of the combustor, cover the requirement of the cell system in the entire period from heating to electricity generation, suppress flashback, maintain stable combustion at low flow rates in the combustor, reduce the thermal shock of the flame to the cell, inhibit the backflow of high-temperature exhaust gas, and control the temperature range of materials of the release member and the gas inlet.

In an embodiment of the present disclosure, the second tube 200 includes two gas inlets, the first chamber 101 includes two air inlets, the gas inlets are arranged symmetric to the air inlets, the flow rectifier 300 is arranged in the first chamber 101 and is connected to the second tube 200 to define the second chamber 301, the second tube 200 and the first chamber 101 are arranged in an up-down direction, and the release member 400 is in communication with the second tube 200 and the first chamber 101. Gas entering the second tube 200 through the gas inlets converges and is then distributed to the second chamber 301 by the release member 400. Air enters the first chamber 101 through the air inlets and is then distributed to the second chamber 301 through the air distribution holes on the flow rectifier 300. The gas and the air are fully mixed in the second chamber 301. An ignition rod mounted in an ignition rod sleeve uses a high-voltage electric arc to ignite the mixture in the second chamber 301. Combustible gases in the second chamber 301 are first mixed with air blown in through the combustion holes for combustion, and are then mixed with air blown in through the transition holes to ensure complete combustion. The exhaust gas after combustion is fully mixed with air blown in through the mixing holes, to reduce the exhaust gas temperature and make the exhaust gas temperature uniform.

In the present disclosure, some terms used when testing a combustor are explained as follows.

Hot spot temperature of the release member 400 (°C): It is the maximum temperature that the release member 400 can endure. Above this temperature, the release member 400 will be at risk of deformation, cracking, ablation, etc. The hot spot temperature needs to be lower than or equal to 900°C. The temperature of the release member 400 is tested by arranging thermocouple measuring points.

Blow-off limit (SLM): It is the minimum gas flow rate that can sustain the flame at a fixed air flow rate in the case of a lower limit of the turndown ratio of the combustor. The gas flow rate is controlled and fed back by a mass flow controller. The blow-off limit needs to be less than 6 SLM.

Outlet hot spot indicator: Temperature uniformity at the cross-section of the outlet (where the bottommost large opening is an airflow outlet) under an electricity generation mode (which is a normal electricity generation mode), which is calculated based on the following formula: (maximum temperature at the cross-section of the outlet - average temperature at the cross-section of the outlet) / average temperature at the cross-section of the outlet, and needs to be less than or equal to 0.034 under the electricity generation mode. Corresponding data is collected by arranging thermocouples at the outlet.

Pressure loss in the gas flow path (Pa): Pressure loss in the gas flow path in the combustor, which is calculated based on the following formula: (gas inlet pressure - outlet pressure), and needs to be less than or equal to 400 Pa under the electricity generation mode. Pressure pipes are mounted at the gas inlet and outlet, and pressure transmitters are connected to the pressure pipes to test the corresponding pressure.

Combustion efficiency under electricity generation mode: It is calculated under the electricity generation mode based on the following formula: (total calorific value of fuel at the inlet - total calorific value of remaining combustibles at the outlet) / total calorific value of fuel at the inlet. The combustion efficiency under the electricity generation mode needs to be greater than or equal to 99%. The total calorific value of remaining combustibles at the outlet is obtained through analysis of exhaust gas. The calorific value of fuel at the inlet is measured in real time by a calorific value meter.

Combustion efficiency under minimum flame mode: It is calculated under the minimum flame mode (6 SLM) based on the following formula: total calorific value of remaining combustibles at the outlet / total calorific value of fuel at the inlet, and needs to be greater than or equal to 95% (where the minimum flame mode is a working mode of the combustor when the SOFC system heats up with a minimum gas volume (where the gas volume is fixed at 6 SLM). The electricity generation mode is a working mode of the combustor when the SOFC generates electricity at full power).

During the test, the cone angle A of the truncated cone segment 420 is defined as α. The diameter of a cross-sectional circle of the cylindrical segment 410 is defined as D_{Cyl}. The diameter of the gas distribution hole on the cylindrical segment 410 is defined as D1. The number of gas distribution holes on the cylindrical segment 410 is defined as N1. The diameter of the gas distribution hole on the truncated cone segment 420 is defined as D2. The number of gas distribution holes on the truncated cone segment 420 is defined as N2. The diameter of the first rectification segment 310 is defined as D_{Cha}. The expansion angle B of the second rectification segment 320 is defined as β. The diameter of the primary hole 321 is defined as D_{Comb}. The hole area of the primary holes 321 is defined as S_{Comb}. The diameter of the secondary hole 322 is defined as D_{Tran}. The hole area of the secondary holes 322 is defined as S_{Tran}. The diameter of the tertiary hole 323 is defined as D_{Mix}. The hole area of the tertiary holes 323 is defined as S_{Mix}. The total area of the air distribution holes on the second rectification segment 320 is defined as S.

**Table 1 shows test examples when different data values are set for the indicators:**

| No. | α | N1 | N 2 | D2/ D1 | D1/ D_{Cyl} | β | D_{Cha}/ D_{Cyl} | S_{Comb}/ S | S_{Tran}/S | S_{Mix}/S | D_{Comb}/ DCha | D_{Tran}/ DCha | D_{Mix}/ DCha |
|---|---|---|---|---|---|---|---|---|---|---|---|---|---|
| Example 1 | 100° | 8 | 10 | 0.75 | 0.3 | 30° | 1.8 | 15% | 10% | 70% | 0.16 | 0.2 | 0.25 |
| Example 2 | 120° | 8 | 10 | 0.75 | 0.3 | 30° | 1.8 | 15% | 10% | 70% | 0.16 | 0.2 | 0.25 |
| Example 3 | 140° | 8 | 10 | 0.75 | 0.3 | 30° | 1.8 | 15% | 10% | 70% | 0.16 | 0.2 | 0.25 |
| Example 4 | 160° | 8 | 10 | 0.75 | 0.3 | 30° | 1.8 | 15% | 10% | 70% | 0.16 | 0.2 | 0.25 |
| Example 5 | 100° | 8 | 10 | 0.5 | 0.3 | 30° | 1.8 | 15% | 10% | 70% | 0.16 | 0.2 | 0.25 |
| Example 6 | 100° | 8 | 10 | 0.6 | 0.3 | 30° | 1.8 | 15% | 10% | 70% | 0.16 | 0.2 | 0.25 |
| Example 7 | 100° | 8 | 10 | 0.9 | 0.3 | 30° | 1.8 | 15% | 10% | 70% | 0.16 | 0.2 | 0.25 |
| Example 8 | 100° | 8 | 10 | 0.75 | 0.15 | 30° | 1.8 | 15% | 10% | 70% | 0.16 | 0.2 | 0.25 |
| Example 9 | 100° | 8 | 10 | 0.75 | 0.2 | 30° | 1.8 | 15% | 10% | 70% | 0.16 | 0.2 | 0.25 |
| Example 10 | 100° | 8 | 10 | 0.75 | 0.4 | 30° | 1.8 | 15% | 10% | 70% | 0.16 | 0.2 | 0.25 |
| Example 11 | 100° | 8 | 10 | 0.75 | 0.3 | 20° | 1.8 | 15% | 10% | 70% | 0.16 | 0.2 | 0.25 |
| Example 12 | 100° | 8 | 10 | 0.75 | 0.3 | 40° | 1.8 | 15% | 10% | 70% | 0.16 | 0.2 | 0.25 |
| Example 13 | 100° | 8 | 10 | 0.75 | 0.3 | 30° | 1.5 | 15% | 10% | 70% | 0.16 | 0.2 | 0.25 |
| Example 14 | 100° | 8 | 10 | 0.75 | 0.3 | 30° | 1.6 | 15% | 10% | 70% | 0.16 | 0.2 | 0.25 |
| Example 15 | 100° | 8 | 10 | 0.75 | 0.3 | 30° | 2 | 15% | 10% | 70% | 0.16 | 0.2 | 0.25 |
| Example 16 | 100° | 8 | 10 | 0.75 | 0.3 | 30° | 1.8 | 10% | 5% | 85% | 0.16 | 0.2 | 0.25 |
| Example 17 | 100° | 8 | 10 | 0.75 | 0.3 | 30° | 1.8 | 20% | 15% | 65% | 0.16 | 0.2 | 0.25 |
| Example 18 | 100° | 8 | 10 | 0.75 | 0.3 | 30° | 1.8 | 15% | 10% | 70% | 0.05 | 0.2 | 0.25 |
| Example 19 | 100° | 8 | 10 | 0.75 | 0.3 | 30° | 1.8 | 15% | 10% | 70% | 0.2 | 0.2 | 0.25 |
| Example 20 | 100° | 8 | 10 | 0.75 | 0.3 | 30° | 1.8 | 15% | 10% | 70% | 0.16 | 0.1 | 0.25 |
| Example 21 | 100° | 8 | 10 | 0.75 | 0.3 | 30° | 1.8 | 15% | 10% | 70% | 0.16 | 0.25 | 0.25 |
| Example 22 | 100° | 8 | 10 | 0.75 | 0.3 | 30° | 1.8 | 15% | 10% | 70% | 0.16 | 0.2 | 0.1 |
| Example 23 | 100° | 8 | 10 | 0.75 | 0.3 | 30° | 1.8 | 15% | 10% | 70% | 0.16 | 0.2 | 0.35 |
| Example 24 | 100° | 4 | 6 | 0.75 | 0.3 | 30° | 1.8 | 15% | 10% | 70% | 0.16 | 0.2 | 0.25 |
| Example 25 | 100° | 12 | 12 | 0.75 | 0.3 | 30° | 1.8 | 15% | 10% | 70% | 0.16 | 0.2 | 0.25 |
| Comparative Example 1 | 70° | 8 | 10 | 0.7 | 0.3 | 30° | 1.8 | 15% | 10% | 70% | 0.16 | 0.2 | 0.25 |
| Comparative Example 2 | 180° | 8 | 10 | 0.7 | 0.3 | 30° | 1.8 | 15% | 10% | 70% | 0.16 | 0.2 | 0.25 |
| Comparative Example 3 | 100° | 8 | 10 | 0.3 | 0.3 | 30° | 1.8 | 15% | 10% | 70% | 0.16 | 0.2 | 0.25 |
| Comparative Example 4 | 100° | 8 | 10 | 0.11 | 0.3 | 30° | 1.8 | 15% | 10% | 70% | 0.16 | 0.2 | 0.25 |
| Comparative Example 5 | 100° | 8 | 10 | 0.75 | 0.05 | 30° | 1.8 | 15% | 10% | 70% | 0.16 | 0.2 | 0.25 |
| Comparative Example 6 | 100° | 8 | 10 | 0.75 | 0.6 | 30° | 1.8 | 15% | 10% | 70% | 0.16 | 0.2 | 0.25 |
| Comparative Example 7 | 100° | 8 | 10 | 0.75 | 0.3 | 10° | 1.8 | 15% | 10% | 70% | 0.16 | 0.2 | 0.25 |
| Comparative Example 8 | 100° | 8 | 10 | 0.75 | 0.3 | 50° | 1.8 | 15% | 10% | 70% | 0.16 | 0.2 | 0.25 |
| Comparative Example 9 | 100° | 8 | 10 | 0.75 | 0.3 | 30° | 1.1 | 15% | 10% | 70% | 0.16 | 0.2 | 0.25 |
| Comparative Example 10 | 100° | 8 | 10 | 0.75 | 0.3 | 30° | 2.5 | 15% | 10% | 70% | 0.16 | 0.2 | 0.25 |
| Comparative Example 11 | 100° | 8 | 10 | 0.75 | 0.3 | 30° | 1.8 | 5% | 10% | 85% | 0.16 | 0.2 | 0.25 |
| Comparative Example 12 | 100° | 8 | 10 | 0.75 | 0.3 | 30° | 1.8 | 22% | 5% | 73% | 0.16 | 0.2 | 0.25 |
| Comparative Example 13 | 100° | 8 | 10 | 0.75 | 0.3 | 30° | 1.8 | 13% | 2% | 85% | 0.16 | 0.2 | 0.25 |
| Comparative Example 14 | 100° | 8 | 10 | 0.75 | 0.3 | 30° | 1.8 | 10% | 20% | 70% | 0.16 | 0.2 | 0.25 |
| Comparative Example 15 | 100° | 8 | 10 | 0.75 | 0.3 | 30° | 1.8 | 15% | 10% | 70% | 0.02 | 0.2 | 0.25 |
| Comparative Example 16 | 100° | 8 | 10 | 0.75 | 0.3 | 30° | 1.8 | 15% | 10% | 70% | 0.25 | 0.2 | 0.25 |
| Comparative Example 17 | 100° | 8 | 10 | 0.75 | 0.3 | 30° | 1.8 | 15% | 10% | 70% | 0.16 | 0.05 | 0.25 |
| Comparative Example 18 | 100° | 8 | 10 | 0.75 | 0.3 | 30° | 1.8 | 15% | 10% | 70% | 0.16 | 0.3 | 0.25 |
| Comparative Example 19 | 100° | 8 | 10 | 0.75 | 0.3 | 30° | 1.8 | 15% | 10% | 70% | 0.16 | 0.2 | 0.05 |
| Comparative Example 20 | 100° | 8 | 10 | 0.75 | 0.3 | 30° | 1.8 | 15% | 10% | 70% | 0.16 | 0.2 | 0.4 |

Further, Comparative Examples 21 and 22 are provided.

Comparative Example 21: If the gas nozzle does not have a conical structure and does not have an opening at the top, the risk of flashback is greatly increased.

Comparative Example 22: If the gas nozzle does not have a conical structure, the flame length is greatly increased.

**Table 2 shows the test results of the examples as follows.**

| No. | Hot spot temperatur e of the release member 400 /°C | Blow-off limit / SLM | Outlet hot spot indicator | Pressure loss in the gas flow path / Pa | Combustion efficiency under electricity generation mode | Combustion efficiency under minimum flame mode |
|---|---|---|---|---|---|---|
| Example 1 | 880 | 1.6 | 0.030 | 290 | 99.8% | 99% |
| Example 2 | 860 | 1.6 | 0.031 | 290 | 99.8% | 99% |
| Example 3 | 850 | 1.5 | 0.033 | 290 | 99.9% | 99% |
| Example 4 | 800 | 1.5 | 0.034 | 290 | 99.9% | 99% |
| Example 5 | 890 | 1.5 | 0.029 | 290 | 99.7% | 98% |
| Example 6 | 886 | 1.6 | 0.030 | 290 | 99.9% | 99% |
| Example 7 | 872 | 1.5 | 0.034 | 290 | 99.5% | 96% |
| Example 8 | 860 | 1.6 | 0.030 | 380 | 99.9% | 99% |
| Example 9 | 870 | 1.6 | 0.030 | 320 | 99.9% | 99% |
| Example 10 | 897 | 1.6 | 0.030 | 220 | 99.9% | 99% |
| Example 11 | 860 | 5.7 | 0.033 | 310 | 99.5% | 95% |
| Example 12 | 880 | 5.2 | 0.034 | 280 | 99.6% | 96% |
| Example 13 | 880 | 1.5 | 0.033 | 360 | 99.8% | 99% |
| Example 14 | 880 | 1.5 | 0.031 | 320 | 99.9% | 99% |
| Example 15 | 880 | 4.8 | 0.034 | 280 | 99.6% | 96% |
| Example 16 | 880 | 1.2 | 0.029 | 290 | 99.3% | 95% |
| Example 17 | 880 | 5 | 0.032 | 290 | 99.2% | 96% |
| Example 18 | 880 | 1.2 | 0.030 | 290 | 99.2% | 95% |
| Example 19 | 880 | 5.9 | 0.030 | 290 | 99.3% | 97% |
| Example 20 | 880 | 2 | 0.033 | 290 | 99.3% | 98% |
| Example 21 | 880 | 5.8 | 0.030 | 290 | 99.5% | 97% |
| Example 22 | 880 | 2.6 | 0.034 | 290 | 99.8% | 98% |
| Example 23 | 880 | 5.7 | 0.030 | 290 | 99.4% | 96% |
| Example 24 | 880 | 5.8 | 0.034 | 290 | 99.8% | 96% |
| Example 25 | 896 | 5.9 | 0.022 | 290 | 99.8% | 97% |
| Comparative Example 1 | 965 | 1.6 | 0.031 | 290 | 99.8% | 99% |
| Comparative Example 2 | 760 | 1.9 | 0.047 | 290 | 99.2% | 98% |
| Comparative Example 3 | 980 | 1.6 | 0.031 | 290 | 99.8% | 99% |
| Comparative Example 4 | 860 | 1.6 | 0.042 | 290 | 99.8% | 99% |
| Comparative Example 5 | 880 | 1.6 | 0.030 | 1620 | 99.8% | 99% |
| Comparative Example 6 | 1056 | 1.6 | 0.030 | 110 | 99.9% | 99% |
| Comparative Example 7 | 860 | 7 | 0.052 | 330 | 99.5% | / |
| Comparative Example 8 | 885 | 8 | 0.08 | 270 | 99.1% | / |
| Comparative Example 9 | 880 | 4.5 | 0.048 | 550 | 99.8% | 99% |
| Comparative Example 10 | 880 | 7.5 | 0.063 | 260 | 99.6% | / |
| Comparative Example 11 | 880 | 0.9 | 0.029 | 290 | 99.6% | 85% |
| Comparative Example 12 | 880 | 9 | 0.032 | 290 | 99.8% | / |
| Comparative Example 13 | 880 | 1.8 | 0.031 | 290 | 97% | 91% |
| Comparative Example 14 | 880 | 2.5 | 0.031 | 290 | 99.6% | 82% |
| Comparative Example 15 | 880 | 3.5 | 0.030 | 290 | 99.3% | 90% |
| Comparative Example 16 | 880 | 8.6 | 0.030 | 290 | 99.5% | / |
| Comparative Example 17 | 880 | 2 | 0.045 | 290 | 99.5% | 98% |
| Comparative Example 18 | 880 | 7.8 | 0.030 | 290 | 99.5% | / |
| Comparative Example 19 | 880 | 2.6 | 0.088 | 290 | 99.5% | 98% |
| Comparative Example 20 | 880 | 9.6 | 0.030 | 290 | 99.4% | / |
| Comparative Example 21 | 1105 | 1.6 | 0.033 | 290 | 99.8% | 99% |
| Comparative Example 22 | 880 | 1.6 | 0.052 | 290 | 99.8% | 99% |

The following conclusions shown in Table 3 are drawn through comparison of the above tests.

| Parameter | Impact when the value of the parameter is too low | Impact when the value of the parameter is too high |
|---|---|---|
| a | Ablation of release member 400 | Outlet temperature uniformity |
| N1 | Blow-off limit | Blow-off limit |
| N2 | Outlet temperature uniformity | Ablation of release member 400 |
| D2/D1 | Ablation of release member 400 | Outlet temperature uniformity |
| D1/D_{Cyl} | Pressure loss | Ablation of release member 400, blow-off limit |
| β | Blow-off limit, outlet temperature uniformity | Blow-off limit, combustion efficiency, outlet temperature uniformity |
| D_{Cha}/D_{Cyl} | Pressure loss, outlet temperature uniformity | Blow-off limit, combustion efficiency, outlet temperature uniformity |
| S_{Comb}/S | Combustion efficiency | Blow-off limit |
| S_{Tran}/S | Combustion efficiency | Combustion efficiency |
| S_{Mix}/S | Outlet temperature uniformity | Combustion efficiency |
| D_{Com}/D_{Cha} | Combustion efficiency | Blow-off limit |
| D_{Tran}/D_{Cha} | Outlet temperature uniformity | Blow-off limit |
| D_{Mix}/D_{Cha} | Outlet temperature uniformity | Blow-off limit |

The flashback affects the hot spot temperature of the release member 400. The ratio of combustion stability to combustion organization affects the blow-off limit, the combustion efficiency under a full-load mode, and the combustion efficiency under the minimum flame mode. The flame length affects the outlet hot spot indicator.

To sum up, the structure of the release member 400 additionally provided in the present disclosure can be used in combination with the first rectification segment 310 to achieve a wide-range adjustment capability of the SOFC system. Conventional combustors do not have targeted optimization of the gas inlet, which easily leads to flashback at low flow rates. Simply reducing the flow area of the gas inlet will cause the flame in the combustor to lengthen significantly, and the pressure loss of the combustor will not meet the requirements of the cell system.

The present disclosure has the following beneficial effects.
(1) The present disclosure can increase the adjustment range of the combustor, cover the requirement of the cell system in the entire period from heating to electricity generation, suppress flashback, maintain stable combustion at low flow rates in the combustor, and reduce the thermal shock of the flame to the cell.
(2) The present disclosure can suppress the backflow of high-temperature exhaust gas and control the temperature range of materials of the gas nozzle and the gas inlet.
(3) The present disclosure can effectively shorten the flame length and reduce the size of the combustor.
(4) The present disclosure can improve the uniformity of the outlet temperature of the combustor and provide a more consistent heat source for downstream processes.
(5) The present disclosure can alleviate the problem of thermal stress concentration during operation of the combustor and improve the stability of the structure.

The embodiments of the present disclosure have been described in detail above with reference to the accompanying drawings, but the present disclosure is not limited to the above embodiments, and various changes may be made within the knowledge of those having ordinary skills in the art without departing from the gist of the present disclosure.

## Claims

1. A combustor, comprising:
a first tube (100), provided with a first chamber (101);
a second tube (200), wherein an end of the second tube (200) entering the first chamber (101) is provided with a release member (400) configured for gas distribution; and
a flow rectifier (300), arranged in the first chamber (101) and connected to the second tube (200) to define a second chamber (301) configured for gas combustion, wherein the release member (400) is located in the second chamber (301), and the second chamber (301) is in communication with the first chamber (101).

2. The combustor of claim 1, wherein the release member (400) comprises a cylindrical segment (410) and a truncated cone segment (420), the cylindrical segment (410) is provided with first release holes (411), the truncated cone segment (420) is provided with second release holes (421), and the first release holes (411) are arranged staggered from the respective second release holes (421).

3. The combustor of claim 2, wherein a cone angle (A) of the truncated cone segment (420) is 100° to 160°.

4. The combustor of claim 2, wherein a quantity of the first release holes (411) is 4 to 12, a quantity of the second release holes (421) is 6 to 12, a ratio of a diameter of each of the first release holes (411) to a diameter of the cylindrical segment (410) is 0.15 to 0.4, and a ratio of a diameter of each of the second release holes (421) to the diameter of each of the first release holes (411) is 0.5 to 0.9.

5. The combustor of claim 2, wherein the flow rectifier (300) comprises a first rectification segment (310) and a second rectification segment (320), the first rectification segment (310) is connected to the second tube (200), the first rectification segment (310) is arranged surrounding the cylindrical segment (410), the truncated cone segment (420) is located in the second rectification segment (320), and an internal space of the second rectification segment (320) gradually expands in an axial direction of the first tube (100).

6. The combustor of claim 5, wherein an expansion angle (B) of the second rectification segment (320) is 20° to 40°.

7. The combustor of claim 5, wherein the second rectification segment (320) is provided with a plurality of layers of distribution holes in communication with the first chamber (101) and the second chamber (301) in the axial direction, the distribution holes comprise a plurality of primary holes (321), a plurality of secondary holes (322), and a plurality of tertiary holes (323), the primary holes (321) are adjacent to the first rectification segment (310), the primary holes (321) account for 10% to 20% of a total hole area of the distribution holes, the secondary holes (322) account for 5% to 15% of the total hole area of the distribution holes, and the tertiary holes (323) account for 65% to 85% of a total hole area of the distribution holes.

8. The combustor of claim 7, wherein a ratio of a diameter of each of the primary holes (321) to a diameter of the first rectification segment (310) is 0.05 to 0.2, a ratio of a diameter of each of the secondary holes (322) to the diameter of the first rectification segment (310) is 0.1 to 0.25, and a ratio of a diameter of each of the tertiary holes (323) to the diameter of the first rectification segment (310) is 0.1 to 0.35.

9. The combustor of claim 5, wherein a ratio of a diameter of the first rectification segment (310) to the diameter of the cylindrical segment (410) is 1.5 to 2.

10. A solid oxide fuel cell, SOFC, system, comprising the combustor of any one of claims 1 to 9.
